(19) Europäisches Patentamt

European Patent Office

Office européen des brevets

(11) **EP 1 101 775 A1**

(12) **EUROPEAN PATENT APPLICATION**
published in accordance with Art. 158(3) EPC

(43) Date of publication:
23.05.2001 Bulletin 2001/21

(51) Int. Cl.[7]: **C08F 36/04**, C08F 2/22,
C08F 2/44

(21) Application number: 00922947.7

(22) Date of filing: 02.05.2000

(86) International application number:
PCT/JP00/02890

(87) International publication number:
WO 00/68283 (16.11.2000 Gazette 2000/46)

(84) Designated Contracting States:
**BE DE ES FR GB IT NL**

(30) Priority: 07.05.1999 JP 12781499

(71) Applicant: **KANEKA CORPORATION**
Osaka-shi, Osaka 530-8288 (JP)

(72) Inventors:
• **HASEGAWA, Mitsumasa**
Takatsuki-shi, Osaka 569-1029 (JP)

• **UENO, Masakuni**
Takasago-shi, Hyogo 676-0026 (JP)
• **NODA, Mitsunaga**
Kakogawa-shi, Hyogo 675-0033 (JP)
• **MITANI, Toragorou**
Takasago-shi, Hyogo 676-0082 (JP)

(74) Representative:
**VOSSIUS & PARTNER**
Siebertstrasse 4
81675 München (DE)

(54) **PROCESS FOR PRODUCING RUBBER LATEX**

(57) A process for preparing a synthetic diene rubber by emulsion polymerization, wherein an electrolyte capable of coagulating particles of a rubber latex is added to the polymerization system in the course of the polymerization when the polymerization conversion reaches 10 to 70 % by weight, thereby producing a rubber latex having a large average particle size of at least 0.1 μm without forming a precipitate in the polymerization step.

EP 1 101 775 A1

**Description**

TECHNICAL FIELD

The present invention relates to a process for preparing a rubber latex which can stably prepare a latex of a rubber having a large particle size in a short period of time.

BACKGROUND ART

Latexes of rubbers composed of aliphatic conjugated dienes as a main component have been employed in various uses, for example, for tires, graft copolymers such as ABS resin (acrylonitrile-butadiene-styrene copolymer) and MBS resin (methyl methacrylate-butadiene-styrene copolymer), and high impact polystyrene. In these graft copolymers and high impact polystyrene, the aliphatic conjugated diene rubbers are employed mainly for the purpose of improving an impact resistance. It is known that the larger the average particle size of rubber latex, the higher the impact resistance. In the preparation of rubber latexes by an emulsion polymerization, it is also well known that there is a clear relationship between the time required for the polymerization and the particle size of rubber latex obtained, and a long period of time is required for obtaining a rubber latex having a large particle size. For the reason, it has been desired to develop a process for the preparation which provides a rubber latex having a large particle size in a shortened period of time.

As a manner of obtaining a rubber latex having a large particle size is known a method of enhancing the particle size by mechanically coagulating the particles of a previously prepared latex having a small particle size (Japanese Patent Publication Kokoku No. 3-54983). However, this method has the disadvantages that there is a possibility of producing an unnecessary precipitate at the time of coagulation, and also special equipment is required and the workability is poor.

Also known is a method wherein an electrolyte is added to a previously prepared latex having a small particle size to coagulate the particles so as to enhance the particle size (Japanese Patent Publication Kokai No. 9-104715). This method requires a coagulation step in addition to a polymerization step. A procedure such as restabilization of the latex by raising the pH with an alkaline substance is also required after the coagulation, thus the method is complicated and the productivity is low.

Japanese Patent Publications Kokai No. 10-77317 and No. 56-136807 disclose method for preparing a rubber latex wherein an electrolyte is added to a polymerization system prior to starting the polymerization. Since the particle size of latex particles is controlled by adding an electrolyte in the initial stage of the polymerization, a very long time of 50 to 92 hours are needed for obtaining a rubber latex having an average particle size of 0.26 to 0.5 $\mu$m, like in the case of preparing a rubber latex having a large average particle size in a usual emulsion polymerization manner, so the productivity is low.

As a method for enhancing the particle size by coagulating the particles to each other during the course of the polymerization are proposed a method wherein a separately prepared rubber latex having a small average particle size is added to a polymerization system (Japanese Patent Publication Kokoku No. 48-16060 and Japanese Patent Publication Kokai No. 63-48313) and a method wherein an additional monomer is added to a polymerization system during the course of the polymerization (Japanese Patent Publication Kokoku No. 3-2165). These methods require addition of a rubber latex having a small particle size or a monomer during the polymerization in order to enhance the particle size of rubber latex. It takes 50 to 60 hours to obtain a rubber latex having an average particle size of 0.25 to 0.45 $\mu$m, so the productivity is low.

As a manner of obtaining a rubber latex having a large particle size in a short time is known a technique of adding a small amount of an emulsifier and a vinyl cyanide monomer before starting polymerization, or a technique of adding a small amount of an emulsifier and an organic solvent such as acetonitrile, propionitrile or butyronitrile to the polymerization system before the polymerization conversion reaches 20 % by weight. These techniques accelerate the polymerization reaction. Also, Japanese Patent Publications Kokai No. 5-17508 and No. 8-27227 propose a method for preparing a rubber latex having a large average particle size by continuously adding an emulsifier from a point of time when the polymerization conversion reaches 10 to 70 % by weight. This method controls enhancement of the particle size by continuous addition of an emulsifier by utilizing a phenomenon that the rate of covering the surface of particles with an emulsifier decreases with the growth of the particles and, as a result, the rubber latex becomes unstable to make the particles stick to each other. Even such a method still takes 30 hours in obtaining a rubber latex having an average particle size of about 0.3 $\mu$m, so the productivity is low.

Under existing circumstances, it takes a long time to prepare a rubber latex having a large average particle size. Also, the method for preparing a rubber latex having a large average particle size by firstly preparing a rubber latex having a small particle size and then coagulating the particles mechanically or with a coagulant to enhance the particle size has the disadvantages that coagulation procedure and procedure for restabilization of latex are required, and precipitates are easily formed. Also, the method wherein the particle size is enhanced during the polymerization requires a long time for the polymerization and the productivity is low.

An object of the present invention is to provide a process for preparing a rubber latex having a large average particle size stably in a shortened period of time without producing precipitates.

DISCLOSURE OF INVENTION

There is a relationship between the particle size of rubber latex and the polymerization reaction velocity, and when the particle size is large, in general the polymerization velocity becomes slow. The present inventors have found that a rubber latex having a large particle size of at least 0.1 μm in weight average particle size can be prepared in a short period of time by firstly starting an emulsion polymerization of a diene monomer under a condition capable of providing a rubber latex having such a particle size that the polymerization proceeds at a sufficiently high velocity, then adding an electrolyte in the course of the polymerization when the polymerization conversion reaches 10 to 70 % by weight to thereby coagulate the particles to enhance the particle size, and further continuing the polymerization until the polymerization conversion reaches 80 % by weight or more.

Thus, the present invention provides a process for preparing a latex of a rubber which comprises emulsion-polymerizing a monomer component comprising 70 to 100 % by weight of an aliphatic conjugated diene monomer and 30 to 0 % by weight of an ethylenically unsaturated monomer copolymerizable therewith, wherein an electrolyte is added to the polymerization system in the course of the polymerization when the polymerization conversion reaches 10 to 70 % by weight.

As the electrolyte is preferably used at least one member selected from the group consisting of a carboxyl group-containing acid having 6 or less carbon atoms, its salt and sodium sulfate. The electrolyte is usually employed in an amount of 0.1 to 5 parts by weight per 100 parts by weight of the monomer component. In the emulsion polymerization, it is preferable to employ water in an amount of 60 to 200 parts by weight per 100 parts by weight of the monomer component.

The process of the present invention is industrially advantageous since a rubber latex having a large average particle size is obtained in a shot time of 6 to 14 hours.

The weight average particle size of a rubber latex can be determined by a light scattering method

BEST MODE FOR CARRYING OUT THE INVENTION

In the present invention, firstly an emulsion polymerization of an aliphatic conjugated diene monomer alone or a mixture of not less than 70 % by weight of an aliphatic conjugated diene monomer and not more than 30 % by weight of an ethylenically unsaturated monomer copolymerizable therewith is started in a conventional manner. The amount of water in the polymerization system is preferably from 60 to 200 parts by weight, more preferably from 70 to 150 parts by weight, per 100 parts by weight of the monomer component. The reaction temperature is not less than 30°C, preferably 35 to 80°C, more preferably 40 to 60°C.

Examples of the aliphatic conjugated diene monomer are, for instance, 1,3-butadiene, isoprene, chloroprene and the like. In particular, 1,3-butadiene is preferred.

As the ethylenically unsaturated monomer, various vinyl compounds and olefin compounds can be used in the present invention. Representative examples thereof are, for instance, a methacrylic ester such as methyl methacrylate or ethyl methacrylate, an acrylic ester such as methyl acrylate or ethyl acrylate, an aromatic vinyl compound such as styrene or α-methylstyrene, its nucleus substitution products such as vinyltoluene or chlorostyrene, and the like. These may be used alone or in combination thereof.

The proportion of the aliphatic conjugated diene monomer in the monomer mixture of aliphatic conjugated diene monomer and ethylenically unsaturated monomer copolymerizable therewith is at least 70 % by weight. If the proportion is less than 70 % by weight, the obtained polymer is poor in properties as a rubber and no toughness is obtained.

Conventional polymerization initiators can be used in the present invention, e.g., a water-soluble persulfate such as potassium persulfate, sodium persulfate or ammonium persulfate, a peroxide such as hydrogen peroxide, cumene hydroperoxide or p-menthane hydroperoxide, and a redox initiator composed of an oxidizing agent as mentioned above and a reducing agent.

The amount of an emulsifier is preferably from 1 to 4 parts by weight per 100 parts by weight of the monomer component. The emulsifier may be additionally fed during the polymerization so as to prevent sticking of particles to each other or formation of a precipitate due to shortage of the emulsifier on the particle surface. Any emulsifiers as used in usual polymerization for rubbers can be used in the present invention, e.g., a fatty acid soap such as sodium oleate, a resin acid soap such as potassium disproportionated rosin, an anionic surfactant such as sodium laurylsulfate or sodium dodecylbenzenesulfonate, a non-ionic surfactant such as polyoxyethylene alkyl ether, and the like.

Other additives, e.g., a chain transfer agent such as mercaptan and a crosslinking agent such as allyl methacrylate, can be used without any restriction.

After starting the polymerization, an electrolyte capable of coagulating polymer particles of a latex is added to the polymerization system when the polymerization conversion falls within the range of 10 to 70 % by weight, preferably 20 to 60 % by weight, thereby coagulating the particles of the latex to enhance the particle size. Examples of the electrolyte are, for instance, an organic acid containing a carboxyl group and having 6 or less carbon atoms such as formic acid, acetic acid, propionic acid, oxalic acid, succinic acid, malic acid or citric acid, its salts, and sodium sulfate. These may be used alone or in combination thereof. The electrolyte is used in an amount of 0.1 to 5 parts by weight per 100 parts by weight of the monomer component. It is convenient to use the electrolyte in the form of a 1 to 20 % by weight aqueous solution. If the addition of the electrolyte is conducted at a time when the polymerization conversion is less than 10 % by weight, a precipitate is easy to be formed. If the addition of the electrolyte is conducted at a time when the polymerization conversion exceeds 70 % by weight, the viscosity of the rubber latex becomes too high and, accordingly, temperature control and stirring are difficult. Also, if the amount of electrolyte added is less than 0.1 part by weight, the particle size of the latex cannot be enhanced to 0.1 $\mu$m or more, and if the amount is more than 5 parts by weight, a precipitate is easy to be produced.

The polymerization conversion (% by weight) as herein used is a value obtained according to the following equation:

$$\text{Polymerization conversion} = \frac{SC \times (W + K) - K}{(1 - SC) \times M} \times 100$$

wherein SC (% by weight) is the solid concentration of polymerization system, W (part by weight) is the amount of water, K (part by weight) is the total amount of emulsifier and electrolyte, and M (part by weight) is the amount of monomer.

The solid concentration SC in the above equation is determined by the following method. About 1 g of a latex is taken out of a polymerization reactor and placed in a vessel (weight A) previously weighed. The latex is allowed to stand under atmospheric pressure (760 mmHg) until it is defoamed, and is weighed (weight B). The latex is then dried for 1 hour in a drier kept at 120°C and is weighed (weight C). The solid concentration is calculated by the following equation.

$$SC = \frac{\text{Weight of sample after drying}}{\text{Weight of sample before drying}} \times 100$$
$$= \frac{\text{Weight C - Weight A}}{\text{Weight B - Weight A}} \times 100$$

After the addition of an electrolyte, the polymerization is further continued with stirring until the polymerization conversion reaches 80 % by weight or higher, thus giving a rubber latex having a weight average particle size of not less than 0.1 $\mu$m in a total polymerization time of 6 to 14 hours. The increase in viscosity of the latex during the polymerization can be suppressed by the addition of electrolyte. The particle size of the obtained latex can be controlled by adjusting the amount of the electrolyte which is added during the polymerization. Further, according to the process of the present invention, the amount of a precipitate formed in the polymerization step can be suppressed to at most 0.2 % by weight based on the monomer used.

The rubber latexes prepared according to the present invention can be employed, for example, in tires as a synthetic rubber and in the preparation of ABS resin, MBS resin and the like by graft polymerization.

The present invention is more specifically explained by means of the following examples in which all parts and % are by weight unless otherwise noted. It is to be understood that the present invention is not limited to these examples.

EXAMPLE 1

A 3 liter pressure polymerization reactor degassed to vacuum was charged with 100 parts of 1,3-butadiene, 2.0 parts of semi-hardened beef tallow fatty acid potassium salt, 0.44 part of potassium tertiary phosphate, 0.2 part of n-dodecylmercaptan, 0.0014 part of ferrous sulfate, 0.0023 part of disodium ethylenediaminetetraacetate, 0.2 part of sodium formaldehyde sulfoxylate and 77 parts of pure water. They were stirred and the temperature was elevated to 40°C. To the reactor was added 0.05 part of p-menthane hydroperoxide to start the polymerization. After 4.5 hours when the solid concentration SC was 36.8 % and the polymerization conversion was 46.2 %, 0.74 part of sodium sulfate was added to the polymerization system and the polymerization was further continued. After 13 hours from starting the polymerization was obtained a latex of a butadiene rubber having a solid concentration of 46.3 %, a weight average particle size of 0.118 µm and a precipitate rate of 0.10 %. The precipitate rate is represented by percentage of the weight of a precipitate based on the weight of the monomer component. The polymerization conversion was 80.7 %. The results are shown in Table 1.

The obtained rubber latex was coagulated with sodium chloride to give a rubber crumb and the gel fraction was measured. The gel fraction of the rubber was 87.8 %, so the quality of the rubber latex was equivalent with that of a rubber latex prepared without conducting the particle size enhancement procedure during the polymerization.

The gel fraction is represented by a weight percentage of a gel in a solid matter of a latex. The gel fraction is measured by coagulating about 5 g of a rubber latex, vacuum-drying the coagulated latex at 50°C for 48 hours, placing about 0.5 g of the obtained solid matter in a previously weighed 150 mesh wire (weight A), weighing it (weight B), immersing the solid matter in toluene for 48 hours with the wire, drying a gel remaining on the wire at 105°C for 30 minutes, and weighing it (weight C). The gel fraction is calculated according to the following equation.

$$\text{Gel fraction} = \frac{\text{Weight of gel}}{\text{Weight of solid matter}} \times 100$$
$$= \frac{\text{Weight C - Weight A}}{\text{Weight B - Weight A}} \times 100$$

EXAMPLE 2

A latex of butadiene rubber was obtained by carrying out a polymerization for 13 hours in the same manner as in Example 1 except that 2.95 parts of sodium sulfate was added 4.5 hours after starting the polymerization at which the solid concentration was 35.9 % and the polymerization conversion was 44.2 %. The obtained latex had a solid concentration of 44.1 %, and the polymerization conversion was 80.8 %. The results are shown in Table 1.

EXAMPLE 3

A latex of butadiene rubber was obtained by carrying out a polymerization for 12 hours in the same manner as in Example 1 except that 0.56 part of oxalic acid was added 4.5 hours after starting the polymerization at which the solid concentration was 34.2 % and the polymerization conversion was 42.5 %. The obtained latex had a solid concentration of 47.7 %, and the polymerization conversion was 92.9 %. The results are shown in Table 1.

EXAMPLE 4

A latex of butadiene rubber was obtained by carrying out a polymerization for 8 hours in the same manner as in Example 1 except that the polymerization temperature was changed to 60°C and 0.74 part of sodium sulfate was added 3 hours after starting the polymerization at which the solid concentration was 42.5 % and the polymerization conversion was 66.3 %. The obtained latex had a solid concentration of 47.7 %, and the polymerization conversion was 92.9 %. The gel fraction was 88.9 %, so the quality of the rubber latex was equivalent with that of a rubber latex prepared without conducting the particle size enhancement procedure during the polymerization. The results are shown in Table 1.

EXAMPLE 5

A latex of butadiene rubber was obtained by carrying out a polymerization for 12 hours in the same manner as in Example 1 except that 0.74 part of sodium sulfate was added 6 hours after starting the polymerization at which the solid concentration was 44.6 % and the polymerization conversion was 69.3 %. The obtained latex had a solid concentration of 48.5 %, and the polymerization conversion was 88.7 %. The results are shown in Table 1.

EXAMPLE 6

A latex of butadiene rubber was obtained by carrying out a polymerization for 12 hours in the same manner as in Example 1 except that 0.74 part of sodium sulfate was added 3 hours after starting the polymerization at which the solid concentration was 34.6 % and the polymerization conversion was 41.5 %. The obtained latex had a solid concentration of 47.4 %, and the polymerization conversion was 84.5 %. The results are shown in Table 1.

EXAMPLE 7

A latex of butadiene rubber was obtained by carrying out a polymerization for 12 hours in the same manner as in Example 1 except that pure water was used in an amount of 172 parts, and 2.05 parts of sodium sulfate was added 6 hours after starting the polymerization at which the solid concentration was 28.5 % and the polymerization conversion was 64.7 %. The obtained latex had a solid concentration of 34.8 %, and the polymerization conversion was 88.8 %. The results are shown in Table 1.

COMPARATIVE EXAMPLE 1

A latex of butadiene rubber was obtained by carrying out a polymerization for 12 hours in the same manner as in Example 1 except that no electrolyte was added to the polymerization system. The polymerization conversion was 86.5 %. The obtained latex had a solid concentration of 49.3 % and a weight average particle size of 0.084 μm. The viscosity of the latex was 20 poises which was so high that usual handling was difficult. The results are shown in Table 1.

COMPARATIVE EXAMPLE 2

A latex of butadiene rubber was obtained by carrying out a polymerization for 12 hours in the same manner as in Example 1 except that the addition of 0.74 part of sodium sulfate as an electrolyte was conducted prior to starting the polymerization instead of the addition during the polymerization. The polymerization velocity was slow, and the obtained latex had a solid concentration of 44.6 % and the polymerization conversion was 73.5 %. The precipitate rate increased to 0.32 %. The results are shown in Table 1.

COMPARATIVE EXAMPLE 3

A latex of butadiene rubber was obtained by carrying out a polymerization for 12 hours in the same manner as in Example 1 except that 0.74 part of sodium sulfate was added 1 hour after starting the polymerization at which the solid concentration was 14.3 % and the polymerization conversion was 9.9 %.. The obtained latex had a solid concentration of 46.1 % and the polymerization conversion was 80.0 %. The precipitate rate increased to 1.04 %. The results are shown in Table 1.

COMPARATIVE EXAMPLE 4

A 3 liter pressure polymerization reactor was charged with 100 parts of 1,3-butadiene, 130 parts of pure water, 0.18 part of semi-hardened beef tallow fatty acid potassium salt, 0.18 part of sodium β-naphthalenesulfonate-formaldehyde polycondensate, 0.063 part of sodium hydroxide, 0.3 part of n-dodecylmercaptan and 0.18 part of potassium persulfate. They were stirred and the temperature was elevated to 65°C. After 12 hours, the solid concentration was 20.6 % and the polymerization conversion was 35.2 %. After 38 hours from starting the polymerization was obtained a latex of a butadiene rubber having a solid concentration of 43.2 %, a weight average particle size of 0.200 μm and a precipitate rate of 0.20 %. The polymerization conversion was 96.5 %. The results are shown in Table 1.

TABLE 1

| | Polymeri-zation time (hour) | Weight average particle size of latex (μm) | Electrolyte | Amount of electrolyte (part) | Polymerization conversion at the time of adding electrolyte (%) | Precipitate rate (%) | Amount of pure water (part) |
|---|---|---|---|---|---|---|---|
| Example 1 | 13 | 0.118 | sodium sulfate | 0.74 | 46.2 | 0.10 | 77 |
| Example 2 | 13 | 0.257 | sodium sulfate | 2.94 | 44.2 | 0.12 | 77 |
| Example 3 | 12 | 0.102 | oxalic acid | 0.56 | 42.5 | 0.19 | 77 |
| Example 4 | 8 | 0.130 | sodium sulfate | 0.74 | 66.3 | 0.20 | 77 |
| Example 5 | 12 | 0.120 | sodium sulfate | 0.74 | 69.3 | 0.15 | 77 |
| Example 6 | 12 | 0.117 | sodium sulfate | 0.74 | 41.5 | 0.19 | 77 |
| Example 7 | 12 | 0.107 | sodium sulfate | 2.05 | 64.7 | 0.02 | 172 |
| Com.Ex.1 | 12 | 0.084 | - | - | - | 0.12 | 77 |
| Com.Ex.1 | 12 | 0.092 | sodium sulfate | 0.74 | 0 | 0.32 | 77 |
| Com.Ex.1 | 12 | 0.097 | sodium sulfate | 0.74 | 9.9 | 1.04 | 77 |
| Com.Ex.1 | 38 | 0.200 | - | - | - | 0.20 | 130 |

INDUSTRIAL APPLICABILITY

According to the process of the present invention, a rubber latex having a weight average particle size of not less than 0.1 µm can be prepared in a short period of 6 to 14 hours, and a precipitate is hard to be formed. The process can remarkably shorten the polymerization time as compared with a conventional process for preparing a rubber latex having a large particle size wherein an electrolyte is added prior to starting the polymerization.

**Claims**

1.  A process for preparing a latex of a rubber which comprises emulsion-polymerizing a monomer component comprising 70 to 100 % by weight of an aliphatic conjugated diene monomer and 30 to 0 % by weight of an ethylenically unsaturated monomer copolymerizable therewith, wherein an electrolyte is added to the polymerization system in the course of the polymerization when the polymerization conversion reaches 10 to 70 % by weight.

2.  The process of Claim 1, wherein said electrolyte is at least one member selected from the group consisting of an acid containing carboxyl group and having 6 or less carbon atoms, its salts and sodium sulfate.

3.  The process of Claim 1 or 2, wherein said electrolyte is employed in an amount of 0.1 to 5 parts by weight per 100 parts by weight of said monomer component.

4.  The process of Claim 1, 2 or 3, wherein water is used in an amount of 60 to 200 parts by weight per 100 parts by weight of said monomer component.

# INTERNATIONAL SEARCH REPORT

| International application No. |
| --- |
| PCT/JP00/02890 |

**A. CLASSIFICATION OF SUBJECT MATTER**
Int.Cl$^7$   C08F36/04, C08F2/22, C08F2/44

According to International Patent Classification (IPC) or to both national classification and IPC

**B. FIELDS SEARCHED**

Minimum documentation searched (classification system followed by classification symbols)
Int.Cl$^7$   C08F36/04, C08F2/22, C08F2/44, C08F279/02

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | EP, 722961, A1 (ROHM AND HAAS COMPANY), | 1-2 |
| Y | 24 July, 1996 (24.07.96), | 3-4 |
| | Claims; page 4, lines 1 to 7 | |
| | & JP, 8-225623, A | |
| | Claims; Par. No. [0016] | |
| | & US, 5534594, A | |
| | | |
| A | JP, 63-48313, A (Nippon Zeon Co., Ltd.), | 1-4 |
| | 01 March, 1988 (01.03.88)  (Family: none) | |
| | | |
| A | JP, 50-71790, A (The International Synthetic Rubber Company, Limited.), | 1-4 |
| | 13 June, 1975 (13.06.75), | |
| | & US, 3966661 | |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 July, 2000 (13.07.00) | 25 July, 2000 (25.07.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)